# EUROPEAN PATENT SPECIFICATION

(11) **EP 3 778 753 B1**
(45) Date of publication and mention of the grant of the patent: **18.05.2022**
(21) Application number: 19191451.4
(22) Date of filing: 13.08.2019
(51) Int. Cl.: C08L 23/04, C08L 23/06

(54) **POLYETHYLENE COMPOSITION**
POLYETHYLENZUSAMMENSETZUNG
COMPOSITION DE POLYÉTHYLÈNE

(43) Date of publication of application: 17.02.2021
(73) Proprietor: SABIC Global Technologies B.V., 4612 PX Bergen op Zoom (NL)
(72) Inventor: DUCHATEAU, Jan Nicolaas Eddy, 6160 GA GELEEN (NL); NEUTEBOOM, Peter, 6160 GA GELEEN (NL); VACHON, Jerome, 6160 GA Geleen (NL); SCHREURS, Franciscus Petrus Hermanus, 1660 GA Geleen (NL)
(74) Representative: Sabic Intellectual Property Group

(56) References cited:
- WO-A1-88/02764
- CN-A- 109 503 926
- CN-B- 104 292 790

## Description

The present invention relates to a composition comprising a polyethylene, a further polymer and a compatibilizer. The invention further relates to a process for making such composition, an article comprising such composition and use of such composition for making an article.

Use of a compatibilizer in blends of a polyolefin and a further polymer such as a polyamide is known, e.g. from EP0327551A1. In EP0327551A1, 0.1 to 10 wt% of an ethylene vinyl alcohol copolymer comprising from 50 to 95 mole percent ethylene groups and from 5 to 50 mole percent vinyl alcohol groups and less than 5.0 mole percent unhydrolyzed vinyl acetate groups is used as the compatibilizer. According to EP0327551A1, the composition has been found to have excellent barrier properties.

Suitable compatibilizers are different depending on the type of the further to be blended with a polyolefin, and thus the choice of the compatibilizer is more challenging when more than one type of a polymer is to be blended with a polyolefin.

Various properties are important for polymer blends. For example, good optical properties such as transparency and gloss are important e.g. for flexible packaging. Tensile properties are also considered important.

It is an object of the invention to provide a composition in which the above-mentioned and/or other problems are solved.

Accordingly, the invention provides a composition comprising
A) a first polymer which is a polyethylene selected from linear low density polyethylene (LLDPE), low density polyethylene (LDPE), high density polyethylene (HDPE), an elastomeric copolymer of ethylene and an α-olefin having 4 to 10 carbon atoms and combinations thereof,
B) a second polymer selected from the group consisting of a polyamide, a polycarbonate and an ethylene vinyl alcohol and combinations thereof and
C) a third polymer which is an ethylene-acrylate copolymer which includes an acrylate represented by formula (I) or (II) as a comonomer:

   CH₂=CR¹-COO-(CH₂)ₙ-OH (I)

   CH₂=CR¹-COO-(CH₂)ₘ-CHOH-CH₂OH (II)

   wherein R¹ is H or C1-C5 linear or branched alkyl, n is an integer of 1-10 and m is an integer of 0-10,
   wherein
   the amount of A) with respect to the total composition is more than 50 wt%,
   the amount of B) with respect to the total composition is 3 to 45 wt% and the amount of C) with respect to the total composition is 0.1 to 10.0 wt%.

It was surprisingly found that the ethylene-acrylate copolymer including an acrylate having a hydroxyl group as a comonomer works as a compatibilizer for obtaining improved optical properties of a composition comprising a polyethylene and a further polymer.

### A) first polymer

The composition according to the invention comprises a first polymer which is a polyethylene selected from linear low density polyethylene (LLDPE), low density polyethylene (LDPE), high density polyethylene (HDPE), an elastomeric copolymer of ethylene and an α-olefin having 4 to 10 carbon atoms and combinations thereof.

The amount of A) with respect to the total composition is more than 50 wt%, for example 60 to 95 wt%, for example 60 to 80 wt% or 80 to 95 wt%.

The production processes of LDPE, HDPE and LLDPE are summarised in Handbook of Polyethylene by Andrew Peacock (2000; Dekker; ISBN 0824795466) at pages 43-66. The catalysts can be divided in three different subclasses including Ziegler Natta catalysts, Phillips catalysts and single site catalysts. The latter class is a family of different classes of compounds, metallocene catalysts being one of them. As elucidated at pages 53-54 of said Handbook a Ziegler-Natta catalysed polymer is obtained via the interaction of an organometallic compound or hydride of a Group I-III metal with a derivative of a Group IV-VIII transition metal. An example of a (modified) Ziegler-Natta catalyst is a catalyst based on titanium tetra chloride and the organometallic compound triethylaluminium. A difference between metallocene catalysts and Ziegler Natta catalysts is the distribution of active sites. Ziegler Natta catalysts are heterogeneous and have many active sites. Consequently polymers produced with these different catalysts will be different regarding for example the molecular weight distribution and the comonomer distribution.

### LDPE

The LDPE may be an ethylene homopolymer or may be an ethylene copolymer comprising ethylene and a comonomer for example butene or hexene.

Preferably, the LDPE has a density of 0.916 to 0.940 g/cm³, more preferably 0.920 to 0.930 g/cm³, determined according to ISO1183.

Preferably, the LDPE has a Melt flow index of 0.1 to 10.0 g/10min, more preferably 1.0 to 5.0 g/10min, determined according to ASTM D1238 (190°C/2.16kg).

The LDPE may be produced by use of autoclave high pressure technology or by tubular reactor technology.

Suitable examples of the LDPE include SABIC 2102X0.

### LLDPE

The LLDPE may be an ethylene homopolymer or may be an ethylene copolymer comprising ethylene and a C3- C10 alpha-olefin comonomer (ethylene-alpha olefin copolymer). Suitable alpha-olefin co monomers include 1-butene, 1-hexene, 4-methyl pentene and 1-octene. The preferred comonomer is 1-hexene. Preferably, the alpha-olefin comonomer is present in an amount of about 5 to about 20 percent by weight of the ethylene-alpha olefin copolymer, more preferably an amount of from about 7 to about 15 percent by weight of the ethylene-alpha olefin copolymer.

Preferably, the density of the LLDPE may range between 0.915 g/cm³ and 0.940 g/cm³, preferably 0.930 to 0.940 g/cm³, determined according to ISO1183.

Preferably, the melt flow index of the LLDPE ranges from 0.1 to 5.0 g/10min, for example from 0.5 to 4.0 g/10min, for example from 1.0 to 3.0 g/10min, determined according to ASTM D1238 (190°C/2.16kg).

The technologies suitable for the LLDPE manufacture include but are not limited to gas- phase fluidized-bed polymerization, polymerization in solution, and slurry polymerization.

According to a preferred embodiment of the present invention the LLDPE has been obtained by gas phase polymerization in the presence of a Ziegler-Natta catalyst.

According to another preferred embodiment, the LLDPE may be obtained by gas phase polymerization in the presence of a metallocene catalyst.

### HDPE

The HDPE may be an ethylene homopolymer or may be an ethylene copolymer comprising ethylene and a comonomer for example butene or hexene.

Preferably, the HDPE has a density of 0.940 to 0.970 g/cm³, more preferably 0.950 to 0.965 g/cm³, determined according to ISO1183.

Preferably, the HDPE has a Melt flow index of 0.1 to 15.0 g/10 min, more preferably 1.0 to 10.0 g/10min, measured according to ASTM D1238 (190 °C/5 kg).

### elastomeric copolymer

The polyethylene may be an elastomeric copolymer of ethylene and an α-olefin having 4 to 10 carbon atoms. The α-olefin comonomer in the elastomeric copolymer is preferably an acyclic monoolefin such as 1-butene, 1-pentene, 1-hexene, 1-octene or 4-methylpentene. Most preferably, the elastomeric copolymer is an ethylene-1-octene copolymer.

Preferably, the elastomeric copolymer has a density of 0.850 to 0.910 g/cm³. Preferably, the density of the elastomeric copolymer is 0.865 to 0.910 g/cm³, for example 0.865 to 0.875 g/cm³ according to ASTM D792.

Preferably, the elastomeric copolymer has a melt flow index of 1.0 to 10.0 dg/min, for example 3.0 to 8.0 dg/min, measured in accordance with ASTM D1238 using a 2.16 kg weight and at a temperature of 190 °C.

The elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomer s may also be prepared using traditional types of heterogeneous multi-sited Ziegler-Natta catalysts.

Preferably, the amount of ethylene in the elastomer is at least 50 mol %. More preferably, the amount of ethylene in the elastomer is at least 57 mol%, for example at least 60 mol %, at least 65 mol% or at least 70 mol%. Even more preferably, the amount of ethylene in the elastomer is at least 75 mol%. The amount of ethylene in the elastomer may typically be at most 97.5 mol%, for example at most 95 mol% or at most 90 mol%.

### B) second polymer

The composition according to the invention comprises a second polymer selected from the group consisting of a polyamide, a polycarbonate and an ethylene vinyl alcohol and combinations thereof.

The amount of B) with respect to the total composition is 3 to 45 wt%, for example 5 to 40 wt% or 10 to 30 wt%. In some preferred embodiments, the amount of B) with respect to the total composition is at least 30 wt%.

In some embodiments, the second polymer comprises at least two of the polycarbonate, the polyamide and the ethylene vinyl alcohol. The second polymer may be a combination of a polycarbonate and a polyamide, a combination of a polycarbonate and an ethylene vinyl alcohol, a combination of a polyamide and an ethylene vinyl alcohol or a combination of a polycarbonate, a polyamide and an ethylene vinyl alcohol. In these combinations, the weight ratio between the polycarbonate and the polyamide may be selected at any ratio, e.g. 1:100 to 100:1, 1:50 to 50:1, 10:1 to 10:1, 5:1 to 1:5 or 1.5:1 to 1:1.5. Similarly, the weight ratio between the weight ratio between the polycarbonate and the ethylene vinyl alcohol and the weight ratio between the polyamide and the ethylene vinyl alcohol may be selected at any ratio, e.g. 10:1 to 10:1, 5:1 to 1:2 or 3:1 to 1:1.

The second polymer may be in the form of unused pellet products or recycled (processed) products in the form of flake, pellet or powder. Preferably, the second polymer is a recycled polymer. Very preferably, the second polymer is a recycled polymer and comprises at least two of the polycarbonate, the polyamide and the ethylene vinyl alcohol.

The composition according to the invention may further comprise a recycled polypropylene. Additionally or alternatively, the composition according to the invention may further comprise a recycled polyester. In particularly preferred embodiments, the second polymer is a recycled polymer, the composition comprises an optional recycled polypropylene and/or an optional recycled polyester and the total amount of B) and the optional recycled polypropylene and the optional recycled polyester is at least 30 wt% with respect to the total composition. The use of such high amount of recycled polymers is particularly beneficial for decreasing the cost.

For example, the amount of the recycled polypropylene is is 0 to 45 wt%, for example 3 to 45 wt%, 5 to 40 wt% or 10 to 30 wt%. In some embodiments, the composition comprises less than 10 wt%, less than 8 wt%, less than 5 wt%, less than 3 wt%, less than 2 wt%, less than 1 wt% or less than 0.1 wt% or 0 wt% of polypropylene or recycled polypropylene.

For example, the amount of the recycled polyester is is 0 to 45 wt%, for example 3 to 45 wt%, 5 to 40 wt% or 10 to 30 wt%. In some embodiments, the composition comprises less than 10 wt%, less than 8 wt%, less than 5 wt%, less than 3 wt%, less than 2 wt%, less than 1 wt% or less than 0.1 wt% or 0 wt% of polyester or recycled polyester.

### polyamide

Polyamides, also known as nylons, are characterized by the presence of a plurality of amide (-C(O)NH-) groups. In some embodiments, the polyamide is selected from the group consisting of polyamide-6, polyamide-6,6, polyamide-4,6, polyamide-11, polyamide-12, polyamide-6,10, polyamide-6, 12, polyamide-6/6,6, polyamide-6/6,12, polyamide-MXD,6, polyamide-6,T, polyamide-6,1, polyamide-6/6,T, polyamide-6/6,I, polyamide-6, 6/6,T, polyamide- 6,6/6,1, polyamide- 6/6, T/6, 1, polyamide-6,6/6,T/6,I, polyamide-6/12/6,T, polyamide-6, 6/12/6,T, polyamide-6/12/6,I, polyamide-6, 6/12/6,1, polyamide-9T, and combinations thereof. In some embodiments, the polyamide comprises a polyamide-6,6. In some embodiments, the polyamide or combination of polyamides has a melting point (Tm) greater than or equal to 171 °C.

Polyamides can be obtained by a number of well-known processes. Polyamides are also commercially available from a variety of sources.

Polyamides having a viscosity number of up to 400 milliliters per gram (mL/g) can be used, or, more specifically, having a viscosity number of 90 to 350 mL/g, or, even more specifically, having a viscosity number of 110 to 250 mL/g, as measured in a 0.5 weight percent solution in 96 weight percent sulfuric acid in accordance with ISO 307.

In some embodiments, the polyamide has an amine end group concentration greater than or equal to 30 microequivalents amine end group per gram of polyamide eq/g) as determined by titration with hydrochloric acid. The amine end group concentration can be 30 to 100 micro eq/g, specifically 30 to 80 micro eq/g. Amine end group content can be determined by dissolving the polyamide in a suitable solvent, optionally with heat. The polyamide solution is titrated with 0.01 Normal hydrochloric acid (HC1) solution using a suitable indication method. The amount of amine end groups is calculated based the volume of HCI solution added to the sample, the volume of HCI used for the blank, the molarity of the HCI solution, and the weight of the polyamide sample.

Examples of suitable polyamide include Akulon F136-e1.

### polycarbonate

Suitable polycarbonate-based resins are described e.g. in US2009/0292048, which is incorporated herein by reference.

Polycarbonates including aromatic carbonate chain units include compositions having structural units of the formula (I):

-R¹-O-CO-O- (I)

in which the R¹ groups are aromatic, aliphatic or alicyclic radicals. Beneficially, R¹ is an aromatic organic radical and, in an alternative embodiment, a radical of the formula (II):

-A¹-Y¹-A²- (II)

wherein each of A¹ and A² is a monocyclic divalent aryl radical and Y¹ is a bridging radical having zero, one, or two atoms which separate A¹ from A². In an exemplary embodiment, one atom separates A¹ from A². Illustrative examples of radicals of this type are -O-, -S-, -S(O)-, -S(O2)-, -C(O)-, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another embodiment, zero atoms separate A¹ from A², with an illustrative example being bisphenol. The bridging radical Y¹ can be a hydrocarbon group or a saturated hydrocarbon group such as methylene, cyclohexylidene or isopropylidene.

Suitable aromatic polycarbonate resins include polycarbonates made from at least a divalent phenol and a carbonate precursor, for example by means of the commonly known interfacial polymerization process or the melt polymersiation method. Suitable divalent phenols that may be applied are compounds having one or more aromatic rings that contain two hydroxy groups, each of which is directly linked to a carbon atom forming part of an aromatic ring. Examples of such compounds are: 4,4'-dihydroxybiphenyl, 2,2-bis(4-hydroxyphenyl)propane (bisphenol A), 2,2-bis(4-hydroxy-3-methylphenyl)propane, 2,2-bis-(3-chloro-4-hydroxyphenyl)-propane, 2,2-bis-(3,5-dimethyl-4-hydroxyphenyl)-propane, 2,4-bis-(4-hydroxyphenyl)-2-methylbutane, 2,4-bis-(3,5-dimethyl-4-hydroxyphenyl)-2-methylbutane, 4,4-bis(4-hydroxyphenyl)heptane, bis-(3,5-dimethyl-4-hydroxyphenyl)-methane, 1,1-bis-(4-hydroxyphenyl)-cyclohexane, 1,1-bis-(3,5-dimethyl-4-hydroxyphenyl)-cyclohexane, 2,2-(3,5,3',5'-tetrachloro-4,4'-dihydroxydiphenyl)propane, 2,2-(3,5,3',5'-tetrabromo-4,4'-dihydroxydiphenyl)propane, (3,3'-dichloro-4,4'-dihydroxyphenyl)methane, bis-(3,5-dimethyl-4-hydroxyphenyl)-sulphon, bis-4-hydroxyphenylsulphon, bis-4-hydroxyphenylsulphide.

The carbonate precursor may be a carbonyl halogenide, a halogen formate or carbonate ester. Examples of carbonyl halogenides are carbonyl chloride and carbonyl bromide. Examples of suitable halogen formates are bis-halogen formates of divalent phenols such as hydroquinone or of glycols such as ethylene glycol. Examples of suitable carbonate esters are diphenyl carbonate, di(chlorophenyl)carbonate, di(bromophenyl)carbonate, di(alkylphenyl)carbonate, phenyltolylcarbonate and the like and mixtures thereof. Although other carbonate precursors may also be used, it is preferred to use the carbonyl halogenides and in particular carbonylchloride, also known as phosgene.

The aromatic polycarbonate resins in the composition according to the invention may be prepared using a catalyst, an acid acceptor and a compound for controlling the molecular mass.

Examples of catalysts are tertiary amines such as triethylamine, tripropylamine and N,N-dimethylaniline, quaternary ammonium compounds such as tetraethylammoniumbromide and quaternary phosphonium compounds such as methyltriphenylfosfoniumbromide.

Examples of organic acid acceptors are pyridine, triethylamine, dimethylaniline and so forth. Examples of inorganic acid acceptors are hydroxides, carbonates, bicarbonates and phosphates of an alkali metal or earth alkali metal.

Examples of compounds for controlling the molecular mass are monovalent phenols such as phenol, p-alkylphenols and para-bromophenol and secondary amines.

### ethylene vinyl alcohol (EVOH)

EVOH is a copolymer of ethylene and vinyl alcohol. EP0327551A1 describes suitable examples of the EVOH which may be used in the present invention.

For example, Copolymers of ethylene and vinyl alcohol suitable for use in the present invention can be prepared by the methods disclosed in U.S. Patent Nos. 3,510,464; 3,560,461; 3,847,845; and 3,585,177.

The ethylene vinyl alcohol copolymer can be hydrolyzed ethylene vinyl acetate copolymer. The ethylene vinyl acetate copolymer is preferably hydrolyzed until there is less than 5.0, preferably 2.0 and more preferably less than 1.5 mole percent vinyl acetate groups. Bottles molded from compositions containing ethylene vinyl alcohol copolymer with less than 5.0 percent unhydrolyzed vinyl acetate groups have better barrier properties. In some embodiments, the amount of ethylene derived units in the ethylene vinyl alcohol is 20 to 60 mol%. In some embodiments, the amount of ethylene derived units in the ethylene vinyl alcohol is 75 to 95 mol% or 85 to 95 mol%. The ethylene vinyl alcohol copolymer may have a number average molecular weight of from 10,000 to 40,000, for example 15,000 to 30,000. The melt index of the ethylene vinyl alcohol copolymer may be 5 to 200, for example 5 to 20 as measured by ASTM D-1238 using a load of 2.16 kg at 190 °C.

### Examples of suitable EVOH include Kuraray EVAL F171B

### C) third polymer

The composition according to the invention comprises a third polymer which is an ethylene-acrylate copolymer which includes an acrylate represented by formula (I) or (II) as a comonomer:

CH₂=CR¹-COO-(CH₂)ₙ-OH (I)

CH₂=CR¹-COO-(CH₂)ₘ-CHOH-CH₂OH (II)

wherein R¹ is H or C1-C5 linear or branched alkyl, n is an integer of 1-10 and m is an integer of 0-10.

Preferably, the amount of C) with respect to the composition is 0.1 to 10.0 wt%, for example 0.2 to 9.0 wt%, 0.3 to 7.0 wt% or 0.5 to 5.0 wt%.

Particularly preferably, the amount of C) with respect to the composition is 0.1 to 4.0 wt%, 0.3 to 3.5 wt% or 0.5 to 3.0 wt%. It was surprisingly observed that such low amount of C) leads to a large increase in secant modulus than larger amounts of C).

Preferably, the amount of C) with respect to the amount of B) in the composition is 0.03 to 0.75, for example 0.05 to 0.30 or 0.30 to 0.60.

Preferably, the total amount of A), B) and C) with respect to the total composition is at least 95 wt%, at least 98 wt%, at least 99 wt%, at least 99.9 wt% or 100 wt%.

The acrylate in the ethylene copolymer may be of a single type or a combination of different types of the acrylate.

Preferably, R¹ is H or C1-C2 alkyl, more preferably R¹ is H or C1 alkyl.

The acrylate in the ethylene-acrylate copolymer may be represented by formula (I). Preferably, n is an integer of 1-5, more preferably 1-3, more preferably 2-3.

In the cases where the acrylate is represented by formula (I), preferred examples of the acrylate include hydroxyethyl methacrylate (R¹ is methyl; n is 2), hydroxyethyl acrylate (R¹ is H; n is 2), hydroxypropyl methacrylate (R¹ is methyl; n is 3), hydroxypropyl acrylate (R¹ is H; n is 3).

More preferably, the acrylate is represented by formula (II). The presence of two hydroxyl group leads to a higher polarity and an improved oxygen barrier. Preferably, m is an integer of 1-10, more preferably m is 1-5, more preferably m is 1-2.

In the cases where the acrylate is represented by formula (II), preferred examples of the acrylate include dihydroxypropyl methacrylate (R1 is methyl; m is 1) and dihydroxypropyl acrylate (R1 is H; m is 1).

Preferably, the comonomers of the ethylene acrylate copolymer consist of ethylene and the acrylate represented by formula (I) and/or the acrylate represented by formula (II).

However, the ethylene acrylate copolymer may comprise one or more further comonomers which are free-radically copolymerizable with ethylene under high pressure, for example 130 MPa or more. Examples of suitable further comomers are α,β-unsaturated C₃-C₈-carboxylic acids, in particular maleic acid, fumaric acid, itaconic acid, acrylic acid, methacrylic acid and crotonic acid, derivatives of α,β-unsaturated C₃-C₈-carboxylic acids, e.g. unsaturated C₃-C₁₅-carboxylic esters, in particular esters of C₁-C₆-alkanols, or anhydrides, in particular methyl methacrylate, ethyl methacrylate, n-butyl methacrylate or tert-butyl methacrylate, methyl acrylate, ethyl acrylate, n-butyl acrylate, 2-ethylhexyl acrylate, tert-butyl acrylate, methacrylic anhydride, maleic anhydride or itaconic anhydride, and 1-olefins such as propene, 1-butene, 1-pentene, 1-hexene, 1-octene or 1-decene. In addition, vinyl carboxylates, particularly preferably vinyl acetate, can be used as comonomers. n-butyl acrylate, acrylic acid or methacrylic acid are particularly advantageously used as comonomer.

In the case of a copolymerization of ethylene, the acrylate (I) and/or (II) and further comonomers, the proportion of the further comonomer or the further comonomers in the reaction mixture is from 1 to 45 % by weight, preferably from 3 to 30 % by weight, based on the amount of all monomers, i.e. the sum of ethylene and all comonomers. Depending on the type of the further comonomer, it can be preferred to feed the further comonomers at a plurality of different points to the reactor.

Preferably, the amount of the acrylate (I) or (II) (total amount of the acrylate (I) and (II) if (I) and (II) are both present) is 0.1-10 mol% of the total of ethylene and all comonomers, for example 1-10 mol%, 3-9 mol% or 5-8 mol%, of the total of ethylene and all comonomers.

Preferably, the ethylene-acrylate copolymer according to the present invention has a density of 915 to 1100 kg/m³ according to ISO1183, for example from 925 to 1050 kg/m³.

Preferably, the ethylene acrylate copolymer according to the present invention has a melt flow rate of 0.10 g/10 min to 150 g/10 min according to ISO1133-1:2011 measured at 190 °C and 2.16 kg, for example from 0.1 to 50 g/10min, for example from 0.3 to 10 g/10min, for example from 0.2 to 5 g/10min, for example from 0.5 to 4 g/10min.

High pressure reactors for the preparation for LDPE are suitable for the preparation of the ethylene acrylate copolymer used in the oxygen barrier layer according to the invention. The high pressure reactors for LDPE can take one of two forms being either an autoclave, with a height-to-diameter ratio in the region of 2-20, or a tubular reactor, with a length-to-diameter ratio from a few hundred up to tens of thousands. These two divergent reactor geometries pose uniquely different chemical engineering problems requiring disparate control conditions. Tubular and autoclave reactors with their disparate profiles require different methods of temperature control. The high pressure reactors for LDPE can alternatively beused in series, where an autoclave and tubular reactor configuration can be combined for the ethylene polymerization reaction.

The autoclave process and the tubular process result in different chain architecture (Tackx and Tacx, Polymer Volume 39, number 14, pp 3109-3113, 1998) and different molecular weight distribution of the polymer (Kaltenbacher, Vol 50, No 1, January 1967, TAPPI). Polymerizing in a tubular reactor has advantages that higher turnovers can be achieved in the polymerization process, the process is easier to scale-up and it is accordingly possible to build "world-scale" plants and the polymerization is in general more economic because of a lower specific consumption of utilities such as electricity and cooling water. On the other hand, for the preparation of LDPE copolymers with very high comonomer content, the use of autoclave reactors is common due to their smaller capacity and near isothermal operation compared to tubular reactors.

The reaction can be optimally controlled by metering different initiators or mixtures of initiators at different initiator injection points. Suitable initiators are well-known. Possible initiators for starting the free-radical polymerization are, for example, air, oxygen, azo compounds or peroxidic polymerization initiators. In general the concentration of added initiator is less than 200 ppm. Thus, the resulting resins are not greatly contaminated by initiator residues and normally require no purification prior to use. Certain initiator residues can impart an off taste or smell to resins, making them undesirable in food packaging applications.

Additionally, peroxide is typically added together with a peroxide solvent which typically comprises C₂-C₂₀ normal or iso-paraffin. The solutions comprise the initiators or initiator mixtures in proportions of from 2 to 65% by weight, preferably from 5 to 40% by weight and particularly preferably from 10 to 30% by weight.

Preferably the acrylate (I) and/or (II) is first mixed with ethylene before it is brought into contact with the free-radical polymerization initiator. Such a mixture of ethylene and the acrylate (I) or (II) can be fed as one stream to the inlet of the tubular reactor. It is also possible to feed more than one stream of ethylene and the acrylate (I) or (II) and feed accordingly one or more of these streams as side stream to the tubular reactor.

During the polymerisation it is possible to add inhibitors, scavengers and/or a chain regulator. Chain transfer is the process by which the growth of a polyethylene chain is terminated in such a way that the free radical associated with it transfers to another molecule on which further chain growth occurs. The molecule to which the free radical is transferred can be either ethylene or a deliberately added chain transfer agent (CTA) such as a solvent molecule. Generally, the effect of adding a chain transfer agent is to reduce the average molecular weight of the resin and as a general rule, chain transfer is controlled by altering reaction conditions and by the addition of chain transfer agents.

The preparation of the copolymer is preferably carried out at pressures of from 150 MPa to 350 MPa. The pressures may preferably be 160 MPa to 300 MPa or more preferably 160 MPa to 280 MPa. The temperatures are preferably in the range from 100°C to 350°C, more preferably from 120°C to 340°C and more preferably from 150°C to 320°C.

### D) additives

The composition according to the invention may further comprise optional components different from the previously mentioned components of the composition, such as additives, wherein the total of the previously mentioned components and the optional components is 100 wt% of the total composition. Accordingly, the invention relates to a composition consisting of the previously mentioned components and the optional components.

The additives may include stabilisers, e.g. heat stabilisers, anti-oxidants, UV stabilizers; colorants, like pigments and dyes; clarifiers; surface tension modifiers; lubricants; flame-retardants; mould-release agents; flow improving agents; plasticizers; anti-static agents; external elastomeric impact modifiers; blowing agents; inorganic fillers such as talc and reinforcing agents; and/or components that enhance interfacial bonding between polymer and filler, such as a maleated polypropylene.

The amount of the additives may e.g. be 0.1 to 5.0 wt%, for example 0.2 to 1.0 wt%, based on the total composition.

### Other aspects

The composition of the invention may be obtained by a process comprising melt-mixing A), B) and C) and optionally the optional components by using any suitable means. Accordingly, the invention further relates to a process for the preparation of the composition according to the invention comprising melt mixing A), B) and C) and optional components. Preferably, the composition of the invention is made in a form that allows easy processing into a shaped article in a subsequent step, like in pellet or granular form. Preferably, the composition of the invention is in pellet or granular form as obtained by mixing all components in an apparatus like an extruder; the advantage being a composition with homogeneous and well-defined concentrations of the additives.

Suitable conditions for melt-mixing, such as temperature, pressure, amount of shear, screw speed and screw design when an extruder is used are known to the skilled person.

The invention further relates to an article comprising the composition according to the invention. Preferably, the article is a blow moulded article, an injection moulded article, one or more layers in a multi layer film or a multi layer blow moulded article, a 3D printed article, an extrusion coated article or a foam.

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

### Experiments

Following materials were used.
LDPE 2102X0 from SABIC
PET 9613 from SABIC
PA Akulon F136-E1 from DSM Engineering plastics,
EVOH EVAL F171B from Kuraray,
preparation of ethylene acrylate copolymer

Ethylene and hydroxyethyl methacrylate were copolymerized in a high pressure continuously stirred autoclave reactor at a pressure of 2000 bar. The reaction temperature was constant at 200°C.

A solution of hydroxyethyl methacrylate (HEMA) in iso propyl alcohol (IPA) was continuously injected in the autoclave reactor. Further ethylene was continuously charged to the reactor. The reaction was started by continuously adding a solution of suitable peroxide (t-butyl peroxy-2-ethylhexanoate) in n-heptane. The amount of HEMA with respect to the total of ethylene and HEMA fed to the reactor was 0.2 mole%.

### Blends and films

Compositions according to Table 1 were mixed using a ZSK 18 corotating twin screw extruder using the following conditions:

| Screw rotation | RPM | 250 |
|---|---|---|
| Zone 1 | °C | 210 |
| Zone 2 | °C | 250 |
| Zone 3 | °C | 250 |
| Zone 4 | °C | 250 |
| Zone 5 | °C | 250 |
| Zone 6 | °C | 255 |
| Zone 7 | °C | 265 |
| Zone 8 | °C | 270 |
| Zone 9 | °C | 275 |
| Output | kg/h | 6 |

For experiments A-C and 1-4, Cast film was made on a Collin Teachline cast film extruder from the polymer mixtures with the following settings:

| Screw rotation | RPM | 100 |
|---|---|---|
| Zone 1 | °C | 170 |
| Zone 2 | °C | 200 |
| Zone 3 | °C | 215 |
| Zone 4 | °C | 230 |
| Zone 5 | °C | 250 |
| Pressure | bar | 90 |
| Amperage (11) | A | 3.2 |
| Moment | % | 68 |
| melt temperature (T1) | °C | 208 |
| output | kg/h | 2 |
| Die width | mm | 30 |
| Die gap | mm | 1 |
| Distance to chill roll | mm | 200 |
| Film width | mm | 100 |
| Film thickness | mm | 50 |

For experiments D and 5, the obtained compositions were then processed on a Collin Teachline blown film extruder to obtain a film with a thickness of 50 um with the following settings:

| Screw rotation | RPM | 100 |
|---|---|---|
| Zone 1 | °C | 170 |
| Zone 2 | °C | 200 |
| Zone 3 | °C | 215 |
| Zone 4 | °C | 230 |
| Zone 5 | °C | 250 |
| Pressure | bar | 90 |
| Amperage (11) | A | 3.2 |
| Moment | % | 68 |
| melt temperature (T1) | °C | 208 |
| output | kg/h | 2 |
| Die diameter | mm | 30 |
| Die gap | mm | 1 |
| Freeze line height | mm | 150 |
| Film width | mm | 100 |
| Film thickness | mm | 50 |

Tensile strength of the obtained films were measured according to ISO527-3 with a tensile speed of 50 mm/min in the machine direction (MD). For experiments D and 5, the tensile strength was measured also for transverse direction (TD).

Gloss was measured according to ASTM D2457 at a viewing angle of 45° on the outside of the blown film sample in MD and TD direction. The gloss value in table 3 is the average of the gloss in TD and the gloss in MD.

**Table 1**

| Ex | LDPE | PA | EVOH | PE-HEMA | Wt ratio PE-HEMA /2^{nd} pol | Secant modulus | Tensile strength | Tensile Strain |
|---|---|---|---|---|---|---|---|---|
| | w% | w% | w% | wt% | | Mpa | Mpa | % |
| CEx A | 100.0 | 0 | 0 | 0 | | 91.6 | 17.9 | 836 |
| CEx B | 95.0 | 0 | 5 | 0 | | 122 | 20.0 | 963 |
| 1 | 92.5 | 0 | 5 | 2.5 | 0.50 | 159 | 22.0 | 859 |
| 2 | 90.0 | 0 | 5 | 5 | 1.00 | 136 | 19.5 | 842 |
| CEx C | 90.0 | 10 | 0 | 0 | | 158 | 24.6 | 996 |
| 3 | 87.5 | 10 | 0 | 2.5 | 0.25 | 166 | 24.2 | 951 |
| 4 | 85.0 | 10 | 0 | 5 | 0.50 | 144 | 24.2 | 793 |

| | | | | | | | | |
|---|---|---|---|---|---|---|---|---|
| * 2^{nd} pol = PA or EVOH | | | | | | | | |

From comparison of Ex B, 1 and 2; and Ex C, 3 and 4, it can be understood that the addition of PE-HEMA to the blend results in the increase in secant modulus. Tensile strength and tensile strain are maintained at sufficient level.

The secant modulus is the highest when the amount of PE-HEMA is 2.5 wt%.

**Table 2**

| Ex | LDPE | PET | PA | EVOH | total 2^{nd} pol* | PE-HEMA | Wt ratio PE-HEMA: total 2^{nd} pol |
|---|---|---|---|---|---|---|---|
| | w% | w% | w% | w% | w% | | |
| CEx D | 70 | 12.5 | 12.5 | 5 | 30 | 0 | |
| 5 | 67.5 | 12.5 | 12.5 | 5 | 30 | 2.5 | 0.08 |

| | | | | | | | |
|---|---|---|---|---|---|---|---|
| *Total 2^{nd} pol = total of PET, PA and EVOH | | | | | | | |

**Table 3**

| Ex | Secant modulus | Tensile strength | Tensile Strain | Secant modulus | Tensile strength | Tensile Strain | Gloss |
|---|---|---|---|---|---|---|---|
| | Mpa | Mpa | % | Mpa | Mpa | % | Gloss units |
| | MD | | | TD | | | average of TD, MD |
| CEx D | 236 | 26.7 | 973 | 149 | 2.6 | 3 | 10 |
| 5 | 247 | 32.2 | 1047 | 202 | 10 | 13 | 24 |

From comparison of Ex D and 5, it can be understood that addition of PE-HEMA to the blend results in the increase in secant modulus, tensile strength, tensile strain and gloss.

### Microscopy

Compositions according to Table 4 were mixed using a ZSK 18 corotating twin screw extruder using the same conditions as for compositions of Table 1. The compositions were made into tensile bars. The tensile bars were cut in length direction at the middle of the tensile bar (Machine Direction MD) The samples were sectioned while cooling with liquid nitrogen (-50°C), using a rotation microtome (Leica RM2165). Sections of 1 to 4 µm were obtained for Optical Microscopy. The sections were investigated with the Optical Microscope (Zeiss Imager A2m) using transmitted light (phase contrast), images were taken with an objective of 40x and an internal tube lens of 1.6 or 2.5 times. The sectioned block face was investigated with laser profilometry (Keyence VK-200) using objectives 10x, 20x, 50x and 100x.

**Table 4**

| Ex | LDPE | PA | PE-HEMA |
|---|---|---|---|
| | wt% | wt% | wt% |
| E | 65 | 35 | |
| 6 | 62.5 | 35 | 2.5 |

The composition of Ex 6 was optically more transparent than the composition of Ex E.

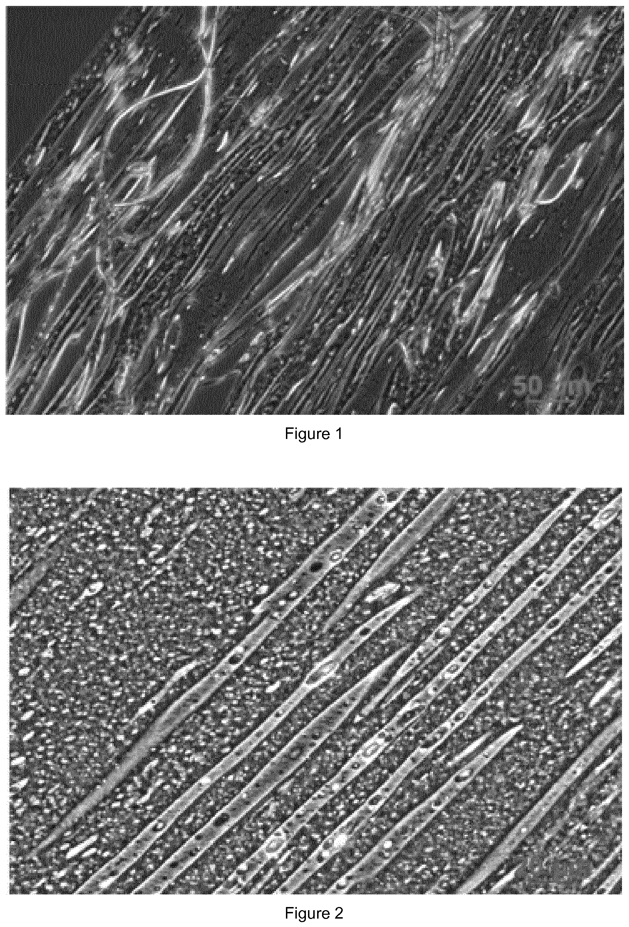

Figures 1 and 2 show the images of the composition of CEx E and Ex 6, respectively. Well defined, elongated PA phase within a PE matrix were visible in the composition of Ex 6.

## Claims

1. A composition comprising
A) a first polymer which is a polyethylene selected from linear low density polyethylene (LLDPE), low density polyethylene (LDPE), high density polyethylene (HDPE), an elastomeric copolymer of ethylene and an α-olefin having 4 to 10 carbon atoms and combinations thereof,
B) a second polymer selected from the group consisting of a polyamide, a polycarbonate and an ethylene vinyl alcohol and combinations thereof and
C) a third polymer which is an ethylene-acrylate copolymer which includes an acrylate represented by formula (I) or (II) as a comonomer:
CH₂=CR¹-COO-(CH₂)ₙ-OH (I)
CH₂=CR¹-COO-(CH₂)ₘ-CHOH-CH₂OH (II)
wherein R¹ is H or C1-C5 linear or branched alkyl, n is an integer of 1-10 and m is an integer of 0-10,
wherein
the amount of A) with respect to the total composition is more than 50 wt%,
the amount of B) with respect to the total composition is 3 to 45 wt% and
the amount of C) with respect to the total composition is 0.1 to 10.0 wt%.

2. The composition according to claim 1, wherein R¹ is H or C1-C2 alkyl, more preferably R¹ is H or C1 alkyl; n is an integer of 1-5, more preferably n is 1-3, more preferably n is 2-3; m is an integer of 1-10, more preferably m is 1-5, more preferably m is 1-2.

3. The composition according to any one of the preceding claims, whereinthe acrylate is selected from the group consisting of hydroxyethyl methacrylate, hydroxyethyl acrylate, hydroxypropyl methacrylate, hydroxypropyl acrylate, dihydroxypropyl methacrylate and dihydroxypropyl acrylate.

4. The composition according to any one of the preceding claims, wherein the amount of units derived from the acrylate is 0.1 to 10 mol% of the total of ethylene and all comonomers in the third polymer.

5. The composition according to any one of the preceding claims, wherein the amount of A) with respect to the total composition is 60 to 95 wt%, for example 60 to 80 wt% or 80 to 95 wt%.

6. The composition according to any one of the preceding claims, wherein the amount of B) with respect to the total composition is 5 to 40 wt% or 10 to 30 wt%.

7. The composition according to any one of the preceding claims, wherein the amount of C) with respect to the total composition is 0.1 to 4.0 wt%, 0.3 to 3.5 wt% or 0.5 to 3.0 wt%.

8. The composition according to any one of the preceding claims, wherein the second polymer comprises at least two of the polycarbonate, the polyamide and the ethylene vinyl alcohol.

9. The composition according to any one of the preceding claims, wherein the second polymer is a recycled polymer.

10. The composition according to any one of the preceding claims, wherein the second polymer is a recycled polymer, the composition comprises an optional recycled polypropylene and an optional recycled polyester and the total amount of B) and the optional recycled polypropylene is at least 30 wt% with respect to the total composition.

11. The composition according to any one of the preceding claims, wherein the composition comprises less than 10 wt%, less than 8 wt%, less than 5 wt%, less than 3 wt%, less than 2 wt%, less than 1 wt% or less than 0.1 wt% or 0 wt% of polyester.

12. The composition according to any one of the preceding claims, wherein the total amount of A), B) and C) with respect to the total composition is at least 95 wt%, at least 98 wt%, at least 99 wt%, at least 99.9 wt% or 100 wt%.

13. A process for the preparation of the composition according to any one of the preceding claims, comprising melt mixing A), B) and C) and optional components.

14. An article comprising the composition according to any one of claims 1-12.

15. The article according to claim 14, wherein the article is a blow moulded article, an injection moulded article, one or more layers in a multi layer film or a multi layer blow moulded article, a 3D printed article, an extrusion coated article or a foam.

## Patentansprüche

1. Zusammensetzung, die Folgendes umfasst:
A) ein erstes Polymer, das ein Polyethylen ausgewählt aus linearem Polyethylen niedriger Dichte (LLDPE), Polyethylen niedriger Dichte (LDPE), Polyethylen hoher Dichte (HDPE), einem elastomeren Copolymer aus Ethylen und einem α-Olefin mit 4 bis 10 Kohlenstoffatomen und Kombinationen davon ist,
B) ein zweites Polymer, das aus der Gruppe bestehend aus einem Polyamid, einem Polycarbonat und einem Ethylen-Vinylalkohol und Kombinationen davon ausgewählt ist, und
C) ein drittes Polymer, das ein Ethylen-Acrylat-Copolymer ist, das ein Acrylat, das durch Formel (I) oder (II) dargestellt ist, als ein Comonomer beinhaltet:
CH₂=CR¹-COO-(CH₂)ₙ-OH (I)
CH₂=CR¹-COO-(CH₂)ₘ-CHOH-CH₂OH (II)
wobei R¹ H oder lineares oder verzweigtes C1-C5-Alkyl ist, n eine ganze Zahl von 1-10 ist und m eine ganze Zahl von 0-10 ist,
wobei
die Menge an A) in Bezug auf die Gesamtzusammensetzung mehr als 50 Gew.-% beträgt,
die Menge an B) in Bezug auf die Gesamtzusammensetzung 3 bis 45 Gew.-% beträgt und
die Menge an C) in Bezug auf die Gesamtzusammensetzung 0,1 bis 10,0 Gew.-% beträgt.

2. Zusammensetzung nach Anspruch 1, wobei R¹ H oder C1-C2-Alkyl ist, besonders bevorzugt R¹ H oder C1-Alkyl ist, n eine ganze Zahl von 1-5 ist, besonders bevorzugt n 1-3 ist, besonders bevorzugt n 2-3 ist, m eine ganze Zahl von 1-10 ist, besonders bevorzugt m 1-5 ist, besonders bevorzugt m 1-2 ist.

3. Zusammensetzung nach einem der vorhergehenden Ansprüche, wobei das Acrylat aus der Gruppe bestehend aus Hydroxyethylmethacrylat, Hydroxyethylacrylat, Hydroxypropylmethacrylat, Hydroxypropylacrylat, Dihydroxypropylmethacrylat und Dihydroxypropylacrylat ausgewählt ist.

4. Zusammensetzung nach einem der vorhergehenden Ansprüche, wobei die Menge an Einheiten, die von dem Acrylat abgeleitet sind, 0,1 bis 10 Mol-% der Gesamtheit von Ethylen und allen Comonomeren im dritten Polymer beträgt.

5. Zusammensetzung nach einem der vorhergehenden Ansprüche, wobei die Menge an A) in Bezug auf die Gesamtzusammensetzung 60 bis 95 Gew.-%, zum Beispiel 60 bis 80 Gew.-% oder 80 bis 95 Gew.-%, beträgt.

6. Zusammensetzung nach einem der vorhergehenden Ansprüche, wobei die Menge an B) in Bezug auf die Gesamtzusammensetzung 5 bis 40 Gew.-% oder 10 bis 30 Gew.-% beträgt.

7. Zusammensetzung nach einem der vorhergehenden Ansprüche, wobei die Menge an C) in Bezug auf die Gesamtzusammensetzung 0,1 bis 4,0 Gew.-%, 0,3 bis 3,5 Gew.-% oder 0,5 bis 3,0 Gew.-% beträgt.

8. Zusammensetzung nach einem der vorhergehenden Ansprüche, wobei das zweite Polymer mindestens zwei von dem Polycarbonat, dem Polyamid und dem Ethylen-Vinylalkohol umfasst.

9. Zusammensetzung nach einem der vorhergehenden Ansprüche, wobei das zweite Polymer ein recyceltes Polymer ist.

10. Zusammensetzung nach einem der vorhergehenden Ansprüche, wobei das zweite Polymer ein recyceltes Polymer ist, die Zusammensetzung ein optionales recyceltes Polypropylen und einen optionalen recycelten Polyester umfasst und die Gesamtmenge an B) und das optionale recycelte Polypropylen mindestens 30 Gew.-% in Bezug auf die Gesamtzusammensetzung beträgt.

11. Zusammensetzung nach einem der vorhergehenden Ansprüche, wobei die Zusammensetzung weniger als 10 Gew.-%, weniger als 8 Gew.-%, weniger als 5 Gew.-%, weniger als 3 Gew.-%, weniger als 2 Gew.-%, weniger als 1 Gew.-% oder weniger als 0,1 Gew.-% oder 0 Gew.-% Polyester umfasst.

12. Zusammensetzung nach einem der vorhergehenden Ansprüche, wobei die Gesamtmenge an A), B) und C) in Bezug auf die Gesamtzusammensetzung mindestens 95 Gew.-%, mindestens 98 Gew.-%, mindestens 99 Gew.-%, mindestens 99,9 Gew.-% oder 100 Gew-% beträgt.

13. Prozess zur Herstellung der Zusammensetzung nach einem der vorhergehenden Ansprüche, der Schmelzmischen von A), B) und C) und optionalen Komponenten umfasst.

14. Artikel, der die Zusammensetzung nach einem der Ansprüche 1-12 umfasst.

15. Artikel nach Anspruch 14, wobei der Artikel ein blasgeformter Artikel, ein spritzgegossener Artikel, eine oder mehrere Schichten in einer Mehrschichtfolie oder einem blasgeformten Mehrschichtartikel, ein 3D-gedruckter Artikel, ein extrusionsbeschichteter Artikel oder ein Schaumstoff ist.

## Revendications

1. Composition, comprenant
A) un premier polymère qui est un polyéthylène sélectionné parmi du polyéthylène basse densité linéaire (LLDPE), du polyéthylène basse densité (LDPE), du polyéthylène haute densité (HDPE), un copolymère élastomère d'éthylène et d'une α-oléfine ayant de 4 à 10 atomes de carbone, et des associations de ceux-ci,
B) un deuxième polymère sélectionné parmi le groupe constitué d'un polyamide, d'un polycarbonate et d'un éthylène-alcool vinylique et d'associations de ceux-ci, et
C) un troisième polymère qui est un copolymère éthylène-acrylate qui inclut un acrylate représenté par la formule (I) ou (II) en tant que co-monomère :
CH₂=CR¹-COO-(CH₂)ₙ-OH (I)
CH₂=CR¹-COO-(CH₂)ₘ-CHOH-CH₂OH (II)
dans laquelle R¹ est H ou alkyle linéaire ou ramifié C1-C5, n est un nombre entier de 1 à 10 et m est un nombre entier de 0 à 10,
dans laquelle
la quantité de A) par rapport à la composition totale est de plus de 50 % en poids,
la quantité de B) par rapport à la composition totale est de 3 à 45 % en poids, et
la quantité de C) par rapport à la composition totale est de 0,1 à 10,0 % en poids.

2. Composition selon la revendication 1, dans laquelle R¹ est H ou alkyle C1-C2, mieux encore R¹ est H ou alkyle C1 ; n est un nombre entier de 1 à 5, mieux encore n est de 1 à 3, mieux encore n est de 2 à 3 ; m est un nombre entier de 1 à 10, mieux encore m est de 1 à 5, mieux encore m est de 1 à 2.

3. Composition selon l'une quelconque des revendications précédentes, dans laquelle l'acrylate est sélectionné parmi le groupe constitué de méthacrylate d'hydroxyéthyle, d'acrylate d'hydroxyéthyle, de méthacrylate d'hydroxypropyle, d'acrylate d'hydroxypropyle, de méthacrylate de dihydroxypropyle et d'acrylate de dihydroxypropyle.

4. Composition selon l'une quelconque des revendications précédentes, dans laquelle la quantité d'unités dérivées de l'acrylate est de 0,1 à 10 % molaire du total d'éthylène et de tous les co-monomères dans le troisième polymère.

5. Composition selon l'une quelconque des revendications précédentes, dans laquelle la quantité de A) par rapport à la composition totale est de 60 à 95 % en poids, par exemple de 60 à 80 % en poids ou de 80 à 95 % en poids.

6. Composition selon l'une quelconque des revendications précédentes, dans laquelle la quantité de B) par rapport à la composition totale est de 5 à 40 % en poids ou de 10 à 30 % en poids.

7. Composition selon l'une quelconque des revendications précédentes, dans laquelle la quantité de C) par rapport à la composition totale est de 0,1 à 4,0 % en poids, de 0,3 à 3,5 % en poids ou de 0,5 à 3,0 % en poids.

8. Composition selon l'une quelconque des revendications précédentes, dans laquelle le deuxième polymère comprend au moins deux du polycarbonate, du polyamide et de l'éthylène-alcool vinylique.

9. Composition selon l'une quelconque des revendications précédentes, dans laquelle le deuxième polymère est un polymère recyclé.

10. Composition selon l'une quelconque des revendications précédentes, dans laquelle le deuxième polymère est un polymère recyclé, la composition comprend un polypropylène recyclé optionnel et un polyester recyclé optionnel et la quantité totale de B) et du polypropylène recyclé optionnel est d'au moins 30 % en poids par rapport à la composition totale.

11. Composition selon l'une quelconque des revendications précédentes, dans laquelle la composition comprend moins de 10 % en poids, moins de 8 % en poids, moins de 5 % en poids, moins de 3 % en poids, moins de 2 % en poids, moins de 1 % en poids ou moins de 0,1 % en poids ou 0 % en poids de polyester.

12. Composition selon l'une quelconque des revendications précédentes, dans laquelle la quantité totale de A), de B) et de C) par rapport à la composition totale est d'au moins 95 % en poids, d'au moins 98 % en poids, d'au moins 99 % en poids, d'au moins 99,9 % en poids ou de 100 % en poids.

13. Procédé pour la préparation de la composition selon l'une quelconque des revendications précédentes, comprenant le mélangeage à l'état fondu de A), de B) et de C) et de composants optionnels.

14. Article, comprenant la composition selon l'une quelconque des revendications 1 à 12.

15. Article selon la revendication 14, dans lequel l'article est un article moulé par soufflage, un article moulé par injection, une ou plusieurs couches dans un film multicouche ou un article multicouche moulé par soufflage, un article imprimé 3D, un article enduit par extrusion ou une mousse.
